# EUROPEAN PATENT APPLICATION

(11) **EP 2 628 631 A2**
(43) Date of publication of application: **21.08.2013**
(21) Application number: 12006469.6
(22) Date of filing: 14.09.2012
(51) Int. Cl.: B60L 11/18

(54) **Data transmission device and method between charger and electric vehicle**

(30) Priority: 20.02.2012 CN 201210039866
(71) Applicant: Eaton Corporation, Cleveland Ohio 44114-2584 (US)
(72) Inventor: Wu, Dongxiao, Changning District Shanghai 200335 (CN); Chen, Jiong, Changning District Shanghai 200335 (CN); Hua, Yahan, Changning District Shanghai 200335 (CN); Lu, Bin, Changning District Shanghai 200335 (CN)
(74) Representative: Wagner, Karl H.

(57) **Abstract**

This disclosure provides a data transmission device used between a charger and an electric vehicle, including an internal interface compatible with messages or commands of a first protocol; an external interface compatible with messages or commands of a second protocol; an outside-to-inside transformation module, being adapted to receive messages or commands of the second protocol from the electric vehicle, to transform the messages or commands of the second protocol to messages or commands of the first protocol according to functions of data carried by the messages or commands, and to send the messages or commands of the first protocol to the charger; and an inside-to-outside transformation module, being adapted to receive messages or commands of the first protocol from the charger, to transform the messages or commands of the first protocol to messages or commands of the second protocol according to functions of data carried by the messages or commands, and to send the messages or commands of the second protocol to the electric vehicle; wherein the messages or commands sent from the outside-to-inside transformation module to the charger include: CER message, CSR message, CCS message and CCR message.

## Description

### FIELD OF INVENTION

The present invention is related to the field of electric vehicles (EV), and especially related to a data transmission device and method between chargers and electric vehicles

### BACKGROUND OF THE INVENTION

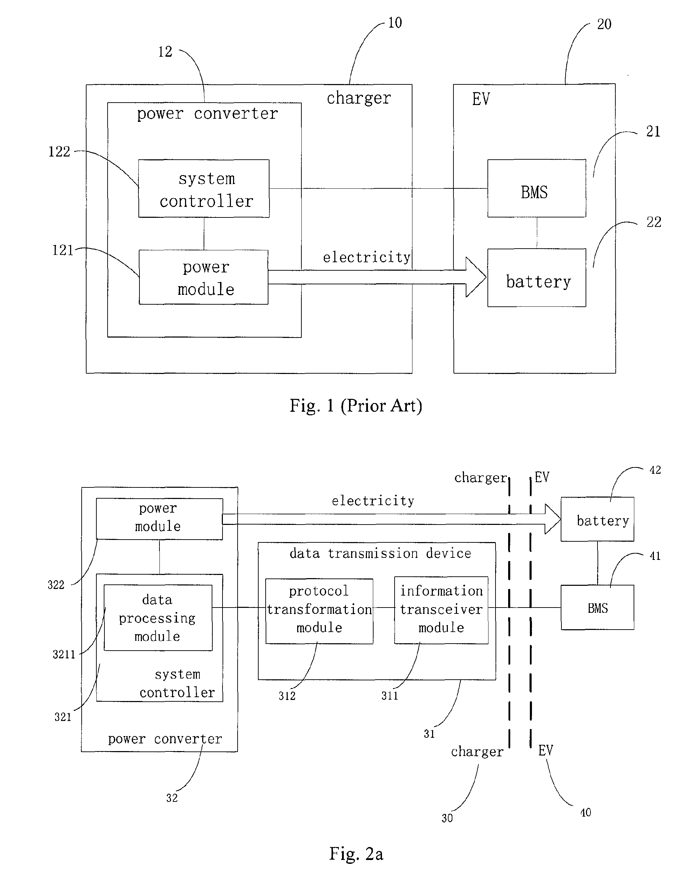

With the development of electric vehicle technology, the number of electric vehicles (EV) is growing rapidly, and EV charging stations which are similar to gas stations become popular. The connection between an electric vehicle and a charger within a charging station during charging process is shown in figure 1. A charger 10 includes power converter 12 which further includes a system controller 122 and a power module 121; an electric vehicle 20 includes a battery management system (BMS) 21 and a battery 22; the system controller 122 is coupled to the BMS 21.

Still referring to figure 1, after the charging circuit of the electric vehicle is coupled to the charger, system controller 122 and BMS 21 send data to each other and the system controller 122 controls the charging from the power module 121 to the battery 22, according to predefined protocols.

Nowadays, there are various types of communication protocols between system controller 122 and BMS 21, including CHAdeMO, SAE, IEC, etc. Each communication protocol has specific protocol specifications, in which different address allocation modes, data package definitions and functions are defined.

Therefore, under current standards, an EV charger which follows a specific protocol can only connect to the BMS following the same protocol, which results in low utilization rate of chargers, since an EV charger in charging stations can only charge the electric vehicles following the same communication protocol.

### SUMMARY OF THE INVENTION

One purpose of the invention is to provide a data transmission device, a power converter, a charger and a communication method between a charger and an EV, which uses a unified internal communication protocol; therefore, one EV charger can charge electric vehicles of various communication protocols, thus improving the utilization rate of the chargers.

According to one aspect of the invention, there is provided a data transmission device used between a charger and an electric vehicle, including:
an internal interface compatible with messages or commands of a first protocol;
an external interface compatible with messages or commands of a second protocol;
an outside-to-inside transformation module, being adapted to receive messages or commands of the second protocol from the electric vehicle, to transform the messages or commands of the second protocol to messages or commands of the first protocol according to functions of data carried by the messages or commands, and to send the messages or commands of the first protocol to the charger; and
an inside-to-outside transformation module, being adapted to receive messages or commands of the first protocol from the charger, to transform the messages or commands of the first protocol to messages or commands of the second protocol according to functions of data carried by the messages or commands, and to send the messages or commands of the second protocol to the electric vehicle;
wherein the messages or commands sent from the outside-to-inside transformation module to the charger include:
   a CER (short for communication end charging request) message for carrying an end-of-charge request of the electric vehicle;
   a CSR (short for communication interface start charging request) message for carrying a start-of-communication request, a start-of-charge request and a battery type identifier of the electric vehicle;
   a CCS (short for communication interface charging status) message for carrying charging status of the electric vehicle; and
   a CCR (short for communication interface configuration confirmation request) message for carrying a charging level request of the battery of the electric vehicle; and
wherein the messages or commands sent from the charger to the inside-to-outside transformation module include:
   a POC (short for power converter output capacity) message for carrying configuration parameters related to an output capacity of the charger; and
   a POS (short for Power converter output status) message for carrying real-time status of the charger.

Optionally, the messages or commands sent from the charger to the inside-to-outside transformation module further include:
a PRA (short for Power converter configuration confirmation acknowledgement) message for carrying a configuration confirmation identifier of the charger; and
a PEN (short for Power converter error notice) message for carrying an error type of the charger.

Optionally, the data transmission device further includes:
a protocol mapping table, which includes a mapping relation between the first protocol and the second protocol;
wherein the outside-to-inside transformation module and the inside-to-outside transformation module transform messages or commands between the first protocol and the second protocol by searching the protocol mapping table.

According to another aspect of the invention, there is provided a power converter, including:
an interface compatible with messages or commands of a first protocol;
wherein the power converter is adapted to communicate with an electric vehicle and control a charging process to the electric vehicle according to messages or commands of the first protocol; and
wherein the messages or commands of the first protocol includes:
   a POC message for carrying configuration parameters related to an output capacity of a charger;
   a CCR message for carrying a charging level request of a battery of the electric vehicle;
   a CSR message for carrying a start-of-communication request, a start-of-charge request and a battery type identifier of the electric vehicle;
   a CCS message for carrying charging status of the electric vehicle;
   a POS message for carrying real-time status of the charger; and
   a CER message for carrying an end-of-charge request of the electric vehicle.

Optionally, messages or commands of the first protocol further include:
a PRA message for carrying a configuration confirmation identifier of the charger; and
a PEN message for carrying an error type of the charger.

According to another aspect of the invention, there is provided a charger, including:
an above described data transmission device; and
an above described power converter;
wherein when the charger charges the electric vehicle, the data transmission device is adapted to communicate with a battery management system of the electric vehicle through the external interface according to the second protocol followed by the battery management system, and is adapted to communicate with the power converter through the internal interface according to the first protocol followed by the power converter.

Optionally, the power converter includes a system controller and a power module;
wherein the system controller is adapted to communicate with the battery management system through the data transmission device, and is adapted to control the power module to charge the battery of the electric vehicle according to messages or commands of the first protocol.

Optionally, the data transmission device includes a protocol transformation module, a first information transceiver module and a second information transceiver module;
wherein the protocol transformation module is adapted to transform messages or commands of the first protocol to messages or commands of the second protocol, or to transform messages or commands of the second protocol to messages or commands of the first protocol;
wherein the first information transceiver module is adapted to forward messages or commands between the protocol transformation module and the battery management system; and
wherein the second information transceiver module is adapted to forward messages or commands between the protocol transformation module and the power converter.

Optionally, the charger further includes:
an instruction module, being adapted to send an indication message or selection signal to the data transmission device, to indicate a communication protocol type followed by the battery management system.

Optionally, the instruction module receives inputs and generates the indication message or selection signal; or
wherein when a coupler of the charger is electrically coupled to the electric vehicle, the instruction module identifies the communication protocol type followed by the battery management system of the electric vehicle according to an identifier of the coupler, generates the indication message or selection signal.

According to another aspect of the invention, there is provided a communication method of a data transmission device during a charging process between a charger and an electric vehicle, including:
step 1, the data transmission device triggers a power converter to start a communication process;
step 2, the data transmission device forwards a battery type to the power converter; and
step 3, the data transmission device forwards an output capacity of the charger to a battery management system of the electric vehicle.

Optionally, the communication method further includes after step 3:
step 4, the data transmission device forwards a start-of-charge request to the power converter.

Optionally, the communication method further includes after step 4:
step 5, the data transmission device forwards a charging level request and battery status of the battery to the power converter;
step 6, the data transmission device forwards an output status of the power converter to the battery management system.

Optionally, the communication method further includes after step 6:
step 7, the data transmission device forwards an end-of-charge request to the power converter.

Comparing with the prior art, the invention has following advantages:
(1).one EV charger can charge electric vehicles of different communication protocols, which improves the utilization rate of the resource of EV chargers and the popularity of electric vehicles;
(2).Flexible hardware configurations are provided for more external protocols in the future, which only needs to update the relation table between the unified internal communication protocol and current communication protocols (also referred to as external communication protocols) to have the EV charger to support electric vehicles following new external protocols.

### DESCRIPTION OF THE DRAWINGS

Figure 1 is a schematic diagram of the connection between a EV charger in a charging station and an electric vehicle in charge in the prior art;
Figure 2a is a schematic diagram of an EV charger provided according to one embodiment of the present invention;
Figure 2b is a schematic diagram of an EV charger provided according to another embodiment of the present invention;
Figure 3 is a sequence chart of an example process illustrating that the EV charger in Figure 2a uses an internal protocol to communicate, according to another embodiment of the present invention;
Figure 4 is a schematic diagram of an example protocol transformation (i.e. protocol mapping) process, according to another embodiment of the present invention;
Figure 5-8 are sequence charts of examples illustrating that the EV charger in Figure 2a uses an internal protocol to communicate, according to embodiments of the present invention.

### DESCRIPTION OF EMBODIMENTS

In order to make the object of the invention, the technical solution and the advantages more clear and concrete, the invention will be described now, without restrictive intent, with reference to the examples illustrated in the figures of the drawings.

During research and development, the inventor discovers that: the power converter within the charger needs to understand commands from different protocols in order to have the EV charger to charge electric vehicles following different communication protocols; and in order to have the power converter to understand commands from different protocols, there is an option including: (1) designing a data transmission device and a unified internal communication protocol which could be understood by both the data transmission device and the power converter, (2) defining definite mapping relationship at instruction level or frame level between the internal communication protocol and each of the current communication protocols, and finishing mapping operation within the data transmission device. Then, one EV charger can charge electric vehicles following different communication protocols using the unified internal communication protocol.

Normally, a charging process of electric vehicles includes four stages:
(1) Handshake stage: after finishing the physical connection between a BMS and a charger and power on, the BMS and the charger are in a handshake stage, and the charger confirmation s vehicle-related information such as vehicle identification number (VIN).
(2) Configuration stage: after the handshake stage, the BMS and the charger are in a configuration stage. In this stage, the charger sends maximum output level to the BMS, and the BMS decides if the charger is able to charge the vehicle by checking if the maximum output level satisfies charging requirements.
(3) Charging stage: after the configuration stage, the BMS and the charger are in a charging stage. The BMS sends battery's charging level requirements (including a charging mode, and the voltage, current and power value required by the battery) and battery charging status (including the measured value of the charging current and voltage, maximum and minimum temperatures of the battery pack, battery SOC, and remaining charging time) to the charger in real time. The charger sends its charging status (including output voltage value, output current value and accumulated charging time) to the BMS, the charger adjusts the charging current and voltage according to the charging level requirement of the battery, and both the BMS and the charger decide if to stop the charging process according to their respective charging parameters and a stop-charging message received from the other party.
(4) end-of-charge stage: after one party of the BMS and the charger stops the charging stage, the BMS and the charger are in an end-of-charge stage. In this stage, the BMS send to the charger the statistical data within the whole charging process.

One of ordinary skill in the art can appreciate that the above various data transmissions do not have to follow the described four-stage mode, they can be finished within more or less stages; and, the data transmissions included in each stage do not have to be exactly the same with the described four-stage mode, they can be arranged in any way as long as the communication purpose is fulfilled.

To make sure the charging process is carried out smoothly, there is provided a unified internal communication protocol according to one embodiment of the present invention, message types of the protocol being shown in table 1.

**Table 1**

| Index | Name | Purpose of the message |
|---|---|---|
| 1 | POC | The power converter sends this message to inform the BMS of the configuration parameters related to its output capacity. Specifically, in handshake stage, the power |
| | | converter informs the data transmission device of the information; and in charging stage, the data transmission device informs the BMS of the information. |
| 2 | CCR | In charging stage, the BMS sends this message to the power converter, carrying the charging level request. (The battery requests optimal charging levels according to its own charging characteristic curve) |
| 3 | PRA | In configuration stage, after the power converter finishes all configurations, the power converter sends this message to inform the BMS that the power converter is ready for charging. |
| 4 | CSR | In handshake stage, the BMS uses this message to send a start-of-communication request and a battery type identifier to the power converter; In configuration stage, when ready for charging, the BMS uses this message to send a start-of-charge request to the power converter. |
| 5 | PEN | In charging stage, when a charging process stops because of a fault or error of the power converter, the power converter sends this message to the BMS to inform the specific error type of the power converter. |
| 6 | CCS | In charging stage, the charging status of the BMS is sent through this message to the power converter. |
| 7 | POS | In charging stage, the real-time status of the power converter is sent through this message to the BMS. |
| 8 | CER | In charging stage, the BMS uses this message to initiate an end-of-charge request to the power converter. |

One of ordinary skill in the art can appreciate that the internal communication protocol can, according to data requests from the power converter (i.e. the charging part) manufacture, provide all necessary data required by the system controller, thereby guaranteeing that this protocol is qualified for the current charging communication process.

It should be noticed that messages of the above unified internal communication protocol can also be referred to as frame, and the message-type table can also be referred to as frame-type table; in addition, messages and frames include commands, and the above message-type table can also be referred to as instruction table. The term 'message' will be used, without restrictive intent, in the following embodiments to describe the unified internal communication protocol.

According to the purposes of the above messages, data included in the messages are shown as table 2.

**Table 2**

| message name | Data that can be included | | | | | | | | | | | |
|---|---|---|---|---|---|---|---|---|---|---|---|---|
| POC | maximum output voltage | | | | | maximum output current | | | maximum output power | | | |
| CCR | output voltage level request | | output current level request | | | | output power level request | | | | charging mode request | |
| PRA | configuration confirmation | | | | | | | | | | | |
| CSR | battery type | | | | | start communication | | | start charging | | | |
| CER | charging stop reason, including: battery error, power converter error, battery full, exceeds maximum charging time, etc. | | | | | | | | | end-of-charge request | | |
| PEN | error type | | | | | | | | | | | |
| POS | out voltage by power converter | | | out current by power converter | | | | out power by power converter | | | | |
| CCS | charging time | remaining charging time | | | estimated total charging time | | | battery SOC | | | | battery temperature |

According to the purposes of the messages and the data included in the messages, the mapping relation between the unified internal communication protocol (also referred to as internal protocol) and external communication protocols (also referred to as external protocol) such as CHAdeMo is defined in Table 3.

**Table 3**

| | internal protocol | external protocol (CHAdeMo) |
|---|---|---|
| 1 | POC | 108H |
| 2 | CCR | part of 102H |
| 3 | PRA | part of 109H |
| 4 | CSR | part of 102H |
| 5 | CER | part of 102H |
| 6 | PEN | part of 109H |
| 7 | POS | part of 109H |
| 8 | CCS | part of 109H and part of 102H |

In other embodiments of the present invention, message types of the internal protocol as shown in Table 1 can be extended, and the number of types to be extended depends on the requirement of users; similarly, data in the Table 2 and mapping relations in the Table 3 (also referred to as protocol-relation table or protocol mapping table) can also be extended.

On one hand, the internal protocol is used between the data transmission device and the power converter; on the other hand, external protocols such as CHAdeMO are used between the data transmission device and the BMS. The data flow of the charging process using above internal protocol is as follows:
Firstly, in handshake stage:
   S11, the data transmission device triggers the power converter to start the communication process (CSR message);
   S12, the data transmission device forwards the battery type to the power converter (CSR message); the battery type is transmitted to the data transmission device from the BMS through an external protocol;
   S13, the power converter sends its output capacity to the data transmission device (POC message).
Secondly, in configuration stage:
   S20, the data transmission device forwards the output capacity to the BMS;
   S21, the data transmission device forwards a start-of-charge request (CSR message), and requests the power converter to start charging; the start-of-charge request is transmitted from the BMS to the data transmission device through external protocols;
   S22, after the power converter has prepared for charging, the power converter sends a confirmation ation message (PRA message) to the data transmission device; and the data transmission device forwards this confirmation ation message to the BMS.
Thirdly, in charging stage:
   S31, the data transmission device forwards the battery's charging level requirements (CCR message) and battery status (CCS message) to the power converter; the charging level requirements and the battery status are transmitted from the BMS to the data transmission device through the external protocol;
   S32, after the power converter receives the charging level requirements (CCR message) and the battery status message (CCS message), the power converter outputs power according to the required charging level (the system controller controls the power module to complete this function), and sends output status of the power converter to the data transmission device (POS message), the output status being forwarded (through messages of the external protocol corresponding to the POS) to the BMS by the data transmission device;
   S33, during normal charging process, steps S31 and S32 are carried out repeatedly;
   S34, end-of-charge signals can be triggered by two independent parts:
      (1) after an error is occurred in the power converter, error prompts (PEN message) can be sent to the data transmission device; the data transmission device forwards the error prompts (through messages of the external protocol corresponding to the PEN) to the BMS after finishing protocol conversion;
      (2) when the BMS needs to stop charging (normal stop/fault stop), the BMS uses the external protocol to send an end-of-charge request to the data transmission device, and the data transmission device sends the end-of-charge request (CER message, including the end-of-charge request and reasons to stop) to the power converter.
Fourthly, in end-of-charge stage:
   the data transmission device and the BMS exchange their respective statistical information during the charging process (including the maximum and minimum voltages of the battery, initial and final SOC, output energy, output power, accumulated charging time, etc.), while the power converter and the data transmission device can avoid exchange information.

According to one embodiment of the present invention, based on above design of the internal protocol, there is provided an EV charger as shown in figure 2a. The EV charger 30 includes: a data transmission device 31, which is coupled to the BMS 41 of the electric vehicles 40 and communicates with the BMS 41 using an external protocol; and a power converter 32, which communicates with the data transmission device 31 using the internal protocol, and realizes communicating with the BMS 41 and charging the battery 42 through data transmission device 31.

Still referring to figure 2a, the data transmission device 31 further includes:
an information transceiver module 311, which is coupled to the BMS 41 of the electric vehicles 40 and communicates with the BMS 41 using an external protocol; and
a protocol transformation module 312, which is adapted to transform messages, frames or commands of various external protocols to messages, frames or commands of the internal protocol or vice versa (that is to transform messages, frames or commands of the internal protocol to messages, frames or commands of various external protocols), and which is coupled to the power converter 32 and communicates with the power converter 32 using an internal protocol.

Still referring to figure 2a, the power converter 32 further includes:
a power module 322, which is adapted to charge the battery 42; and
a system controller 321, which further includes:
   data processing module 3211, being coupled to the protocol transformation module 312, and being adapted to analyze messages of the internal protocol and control the power module 322 to charge the battery 42 or perform other operations (such as sending requests or responses data to the BMS 41) according to instrucitons within the messages.

According to another embodiment of the present invention, the data processing module 3211 can be omitted, the system controller 321 is coupled to the protocol transformation module 312, and the system controller 321 is adapted to analyze messages of the internal protocol and control the power module 322 to charge the battery 42 or perform other operations according to instrucitons within the messages.

According to another embodiment of the present invention, the data transmission device 31 can further include a second information transceiver module (not shown) for communicating with the data processing module 3211 through the internal protocol.

According to another embodiment of the present invention, the information transceiver module 311 can be omitted, and the protocol transformation module 312 can communicate directly with the data processing module 3211 and the BMS. The communication between the protocol transformation module 312 and the system controller 321 uses the internal protocol, while the communication between the protocol transformation module 312 and the BMS 41 uses an external protocol.

According to another embodiment of the present invention, protocol transformation module 312 can be omitted, and the data transmission device 31 is adapted to transform messages, frames or instrucitons of various external protocols to messages, frames or instrucitons of the internal protocol or vice versa

According to another embodiment of the present invention, the data transmission device 31 can be integrated into the power converter 32 or the system controller 321.

According to another embodiment of the present invention, the data transmission device 31 can be located outside of the charger, and between the charger and the electric vehicles.

According to another embodiment of the present invention, the data transmission device 31 can be located inside of electric vehicles.

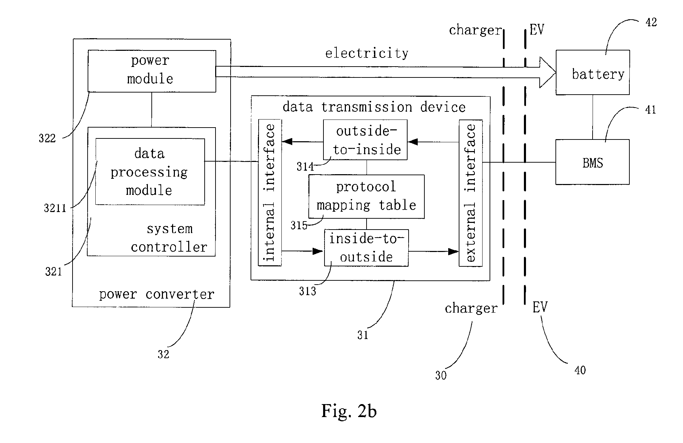

Furthermore, according to another embodiment of the present invention, there is provided an EV charger as shown in figure 2b. The difference between the EV chargers of figure 2a and 2b is the structure of the data transmission device 31.

As shown in figure 2b, the data transmission device 31 includes:
an outside-to-inside transformation module 314, which is adapted to receive messages or data from electric vehicles, transform the messages or data to corresponding messages or data of the internal protocol, and transmit the transformation result to the power converter;
an inside-to-outside transformation module 313, which is adapted to receive messages or data from the power converter, to transform the messages or data to corresponding messages or data of external protocols (to-be-charged vehicles follows the external protocols), and to send the transform result to electric vehicles.

The data transmission device 31 can also include protocol mapping table 315 which includes mapping relations between the internal protocol and external protocols as shown in Table 3. The protocol mapping table 315 is coupled to the outside-to-inside transformation module 314 and the inside-to-outside transformation module 313 respectively, providing mapping relation information between protocols to the outside-to-inside transformation module 314 and the inside-to-outside transformation module 313.

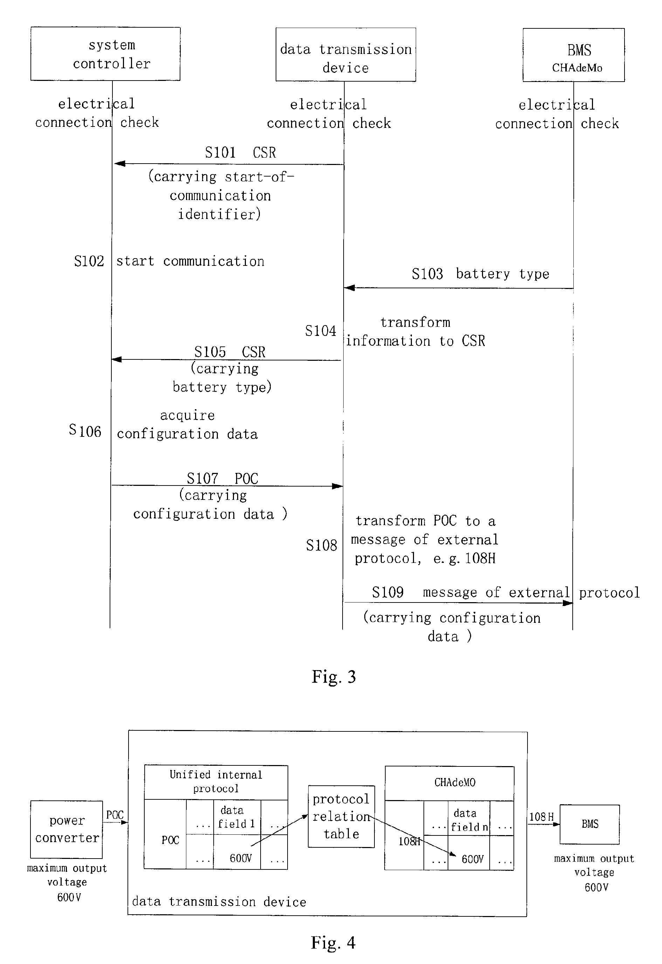

According to one embodiment of the present invention, an example process that the EV charger 30 uses the internal protocol to communicate is shown in figure 3. This communication process illustrates how the electric vehicle 40 acquires the configuration parameter of "maximum output voltage" of the power converter 32. The communication procedure includes:
S101, after the electric vehicles 40 plugs in and after a successful electrical connection check, the data transmission device 31 sends a CSR message to the power converter 32, which triggers the power converter to initiate a communication procedure;
S102, after the system controller 321 receives the CSR message, the system controller 321 initiates a communication procedure and prepares to receive messages from the data transmission device 31;
S103, the BMS sends the battery type to the data transmission device through external protocols;
S104, the data transmission device 31 (or the protocol transformation module 312) transforms the received message to a CSR message of the internal protocol according to the protocol-relation table;
S105, the data transmission device 31 (or the information transceiver module 311) sends the CSR message to the system controller 321;
S106, the system controller 321 acquires the configuration data of maximum output voltage which is 600V according to commands included in the message (the configuration data of maximum output voltage is stored within the system controller 321 when the power converter is manufactured);
S107, the system controller 321 sends the configuration data of maximum output voltage which is 600V to the data transmission device 31 through the message of POC of the internal protocol;
S108, the data transmission device 31 (specifically the protocol transformation module 312) transforms the response message of POC to a message of the external protocol such as 108H of the CHAdeMo, according to the protocol-relation table;
S109, the data transmission device 31 (specifically the information transceiver module 311) sends the message 108H to the BMS 41, which finishes the communication procedure.

According to the decision if this configuration data of 600V satisfies the requirement of the vehicle's battery, the BMS 41 provides to customers information of follow-up actions. If the configuration data satisfies the requirement of the battery, left steps of the configuration stage are carried out; otherwise, an error handling process is carried out, and the electric vehicle informs customers that the battery can not be charged and its reasons.

In addition, the above steps of S106∼S108 are also illustrated in figure 4, which highlights the protocol transformation or mapping process carried out by the data transmission device 31 (or the protocol transformation module 312).

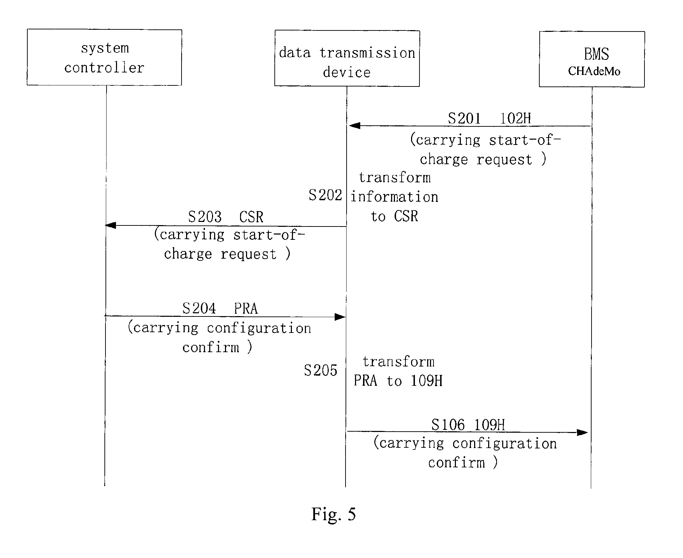

According to another embodiment of the present invention, an example process that the EV charger 30 uses the internal protocol to communicate is shown in figure 5. This communication process illustrates how an electric vehicle 40 which follows CHAdeMo protocol exchanges data with the power converter 32 in the configuration stage, which includes:
S201, the BMS sends the start-of-charge request to the data transmission device through a message of the CHAdeMo protocol (102H, DB4 i.e. the fourth byte);
S202, the data transmission device 31 (specifically the protocol transformation module 312) transforms this message to the CSR message of the internal protocol according to the protocol-relation table;
S203, the data transmission device 31 sends the CSR message (which carries the start-of-charge request) to the system controller 321 to request the power converter to start charging;
S204, after it has prepared for charging, the power converter sends a PRA message to the data transmission device; (if the power converter has not prepared for charging, the BMS waits and repeats a plurality of times until receiving a timeout error)
S205, the data transmission device transforms the PRA message into 109H (DB6); and
S206, the data transmission device sends this message to the BMS.

After the data communication in configuration stage is done, the charging stage begins. The BMS calculates optimal current value according to the battery status and sends current commands, monitors input current, and sends error signals when faults occur.

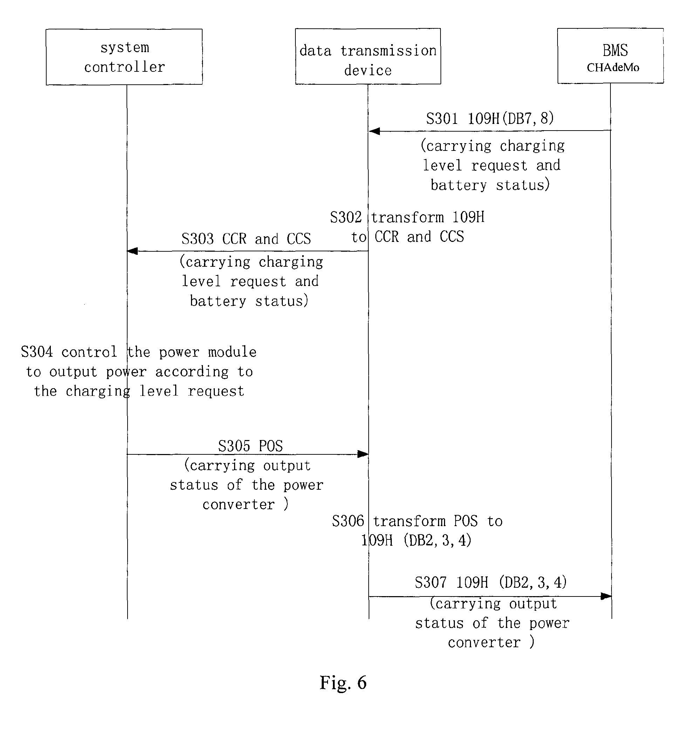

According to another embodiment of the present invention, an example process that the EV charger 30 uses the internal protocol to communicate is shown in figure 6. This communication process illustrates how an electric vehicle 40 which follows CHAdeMo protocol exchanges data with the power converter 32 in the charging stage, which includes:
S301, the BMS sends a charging level requirement and battery status to the data transmission device, the charging level requirement is in 102H (DB2, 3, 4), and the battery status is in 109H (DB7, 8);
S302, the data transmission device 31 (specifically the protocol transformation module 312) transforms this message to the CCR and CCS message of the internal protocol, according to the protocol-relation table;
S303, the data transmission device 31 sends the CCR and CCS (which carry the charging level requirement and the battery status) to the system controller 321;
S304, after receiving the charging level requirement and the battery status information, the system controller 321 outputs power (the system controller 321 controls the power module 322 to carry out this function) according to the charging level requirement;
S305, the system controller 321 sends the output status of the power converter to the data transmission device 31 (through the POS message);
S306, the data transmission device 31 (specifically the protocol transformation module 312) transforms the POS message to 109H (DB2, 3, 4), according to the protocol-relation table; and
S307, the data transmission device 31 sends this message to the BMS.

This communication of charging stage realizes information exchange during the charging stage. During this stage, the charger controls the charging output voltage, and monitors charging abnormal conditions periodically; the BMS calculates optimal current value according to the battery status and sends current commands, monitors input current, and sends error signals when faults occur.

There are two ways to trigger the end-of-charge signal, including a first way that an error of the power converter 32 triggers this signal, and a second way that the BMS triggers this signal when it needs to stop charging (normal stop/fault stop).

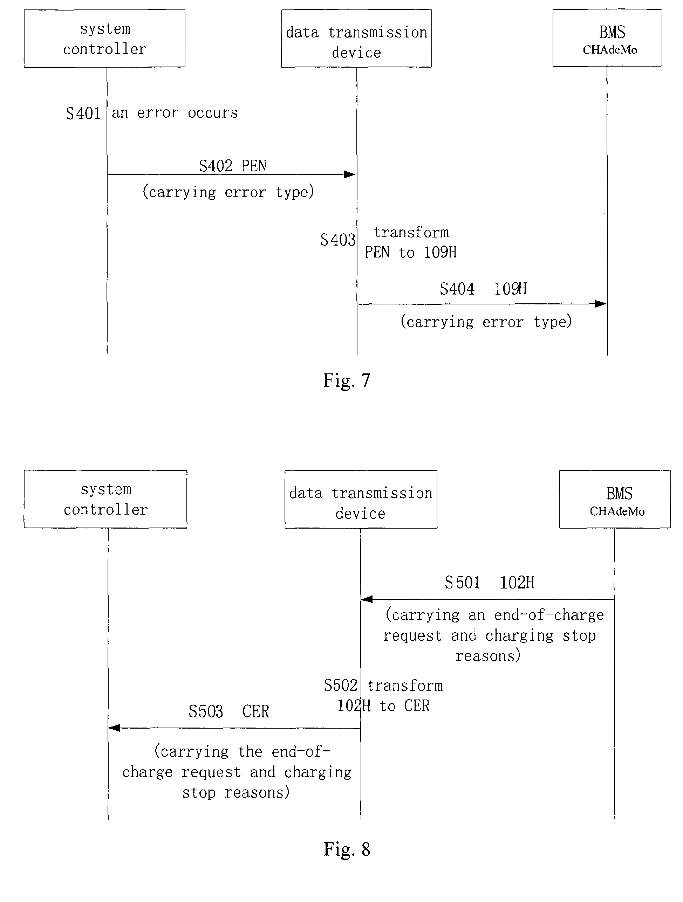

According to another embodiment of the present invention, according to the above first way, an example process that the EV charger 30 uses the internal protocol to communicate is shown in figure 7. This communication process illustrates how an electric vehicle 40 which follows CHAdeMo protocol exchanges data with the power converter 32 to stop the charging process, which includes:
S401, the system controller 321 detects a fault or error at the power converter;
S402, the system controller 321 sends the error type information to the data transmission device 31 (through PEN message);
S403, the data transmission device 31 transforms the PEN message (carrying the error type) to the corresponding 109H (DB6); and
S404, the data transmission device 31 sends the message to the BMS.

According to another embodiment of the present invention, according to the above second way, an example process that the EV charger 30 uses the internal protocol to communicate is shown in figure 8. This communication process illustrates how an electric vehicle 40 which follows CHAdeMo protocol exchanges data with the power converter 32 to stop the charging process, which includes:
S501, the BMS sends an end-of-charge request through 102H (DB5, 6) to the data transmission device 31;
S502, the data transmission device 31 transforms this 102H (carrying the end-of-charge request and charging stop reasons) to the corresponding CER message;
S503, the data transmission device 31 sends the CER message (carrying the end-of-charge request and charging stop reasons) to the power converter (specifically the system controller 321).

The data transmission device does not forward all messages from the BMS to the power converter; the data transmission device comprises certain data processing ability, and only forwards necessary filtered messages to the power converter.

For example, the data transmission device calculates the charging time, and sends the result to the power converter and the BMS simultaneously, while the total charging time is processed in a similar way. For another example, the data transmission device can process the end-of-charge request from the BMS, keeps the charging stop reasons, and only sends an end-of-charge order to the power converter.

One of ordinary skill in the art can appreciate that the above embodiments using CHAdeMo as external protocols are provided purely by way of example and without restrictive intent.

The methods and systems in the invention enable an EV charger to charge electric vehicles of different communication protocols by adding the data transmission device between the charger and electric vehicles, thereby improving the utilization rate of chargers in a charging station and the popularity of electric vehicles. The methods and systems in the invention provide flexibility for more external protocols in the future, which only needs to update the relation table between the internal communication protocol and communication protocols (i.e. external communication protocols) to have the EV charger support electric vehicles of new external protocols.

Although the present invention has been illustrated and described with reference to above embodiments, those ordinary skilled in the art shall appreciate that various modifications in forms and details may be made without departing from the spirit and scope of the invention.

## Claims

1. A data transmission device used between a charger and an electric vehicle, comprising:
an internal interface compatible with messages or commands of a first protocol;
an external interface compatible with messages or commands of a second protocol;
an outside-to-inside transformation module, being adapted to receive messages or commands of the second protocol from the electric vehicle, to transform the messages or commands of the second protocol into messages or commands of the first protocol according to functions of data carried by the messages or commands, and to send the messages or commands of the first protocol to the charger; and
an inside-to-outside transformation module, being adapted to receive messages or commands of the first protocol from the charger, to transform the messages or commands of the first protocol into messages or commands of the second protocol according to functions of data carried by the messages or commands, and to send the messages or commands of the second protocol to the electric vehicle;
wherein the messages or commands sent from the outside-to-inside transformation module to the charger include:
a CER message for carrying an end-of-charge request of the electric vehicle;
a CSR message for carrying a start-of-communication request, a start-of-charge request and a battery type identifier of the electric vehicle;
a CCS message for carrying charging status of the electric vehicle; and
a CCR message for carrying a charging level request of the battery of the electric vehicle; and
wherein the messages or commands sent from the charger to the inside-to-outside transformation module include:
a POC message for carrying configuration parameters related to an output capacity of the charger; and
a POS message for carrying real-time status of the charger.

2. The data transmission device of claim 1, wherein the messages or commands sent from the charger to the inside-to-outside transformation module further include:
a PRA message for carrying a configuration confirmation identifier of the charger; and
a PEN message for carrying an error type of the charger.

3. The data transmission device of claim 1, further comprising:
a protocol mapping table, which includes a mapping relation between the first protocol and the second protocol;
wherein the outside-to-inside transformation module and the inside-to-outside transformation module transform messages or commands between the first protocol and the second protocol by searching the protocol mapping table.

4. A power converter, comprising:
an interface compatible with messages or commands of a first protocol;
wherein the power converter is adapted to communicate with an electric vehicle and to control a charging process of the electric vehicle according to messages or commands of the first protocol; and
wherein the messages or commands of the first protocol include:
a POC message for carrying configuration parameters related to an output capacity of a charger;
a CCR message for carrying a charging level request of a battery of the electric vehicle;
a CSR message for carrying a start-of-communication request, a start-of-charge request and a battery type identifier of the electric vehicle;
a CCS message for carrying charging status of the electric vehicle;
a POS message for carrying real-time status of the charger; and
a CER message for carrying an end-of-charge request of the electric vehicle.

5. The power converter of claim 4, wherein the messages or commands of the first protocol further include:
a PRA message for carrying a configuration confirmation identifier of the charger; and
a PEN message for carrying an error type of the charger.

6. A charger, comprising:
a data transmission device of claim 1; and
a power converter of claim 4;
wherein when the charger charges the electric vehicle, the data transmission device is adapted to communicate with a battery management system of the electric vehicle through the external interface according to the second protocol followed by the battery management system, and is adapted to communicate with the power converter through the internal interface according to the first protocol followed by the power converter.

7. The charger of claim 6, wherein the power converter includes a system controller and a power module;
wherein the system controller is adapted to communicate with the battery management system through the data transmission device, and is adapted to control the power module to charge the battery of the electric vehicle according to messages or commands of the first protocol.

8. The charger of claim 6, wherein the data transmission device includes a protocol transformation module, a first information transceiver module and a second information transceiver module;
wherein the protocol transformation module is adapted to transform messages or commands of the first protocol into messages or commands of the second protocol, or to transform messages or commands of the second protocol into messages or commands of the first protocol;
wherein the first information transceiver module is adapted to forward messages or commands between the protocol transformation module and the battery management system; and
wherein the second information transceiver module is adapted to forward messages or commands between the protocol transformation module and the power converter.

9. The charger of claim 6, further comprising:
an instruction module, being adapted to send an indication message or selection signal to the data transmission device, to indicate a communication protocol type followed by the battery management system.

10. The charger of claim 9, wherein the instruction module receives inputs and generates the indication message or selection signal; or
wherein when a coupler of the charger is electrically coupled to the electric vehicle, the instruction module identifies the communication protocol type followed by the battery management system of the electric vehicle according to an identifier of the coupler, and generates the indication message or selection signal.

11. A communication method of a data transmission device of claim 1 during a charging process between a charger and an electric vehicle, comprising:
step 1, the data transmission device prompts a power converter to start a communication process;
step 2, the data transmission device forwards a battery type to the power converter; and
step 3, the data transmission device forwards an output capacity of the charger to a battery management system of the electric vehicle.

12. The communication method of claim 11, further comprising after step 3:
step 4, the data transmission device forwards a start-of-charge request to the power converter.

13. The communication method of claim 12, further comprising after step 4:
step 5, the data transmission device forwards a charging level request and battery status of the battery to the power converter; and
step 6, the data transmission device forwards an output status of the power converter to the battery management system.

14. The communication method of claim 13, further comprising after step 6:
step 7, the data transmission device forwards an end-of-charge request to the power converter.
